# EUROPEAN PATENT SPECIFICATION

(11) **EP 0 632 653 B1**
(45) Date of publication and mention of the grant of the patent: **06.09.2000**
(21) Application number: 94108046.7
(22) Date of filing: 25.05.1994
(51) Int. Cl.: H04N 5/92

(54) **Digital high definition video recorder having high definition display in trick-play modes**
Digitaler Videorekorder für Videosignale mit hoher Auflösung mit hoch aufgelöster Anzeige in speziellen Wiedergabebetreibsarten
Magnétoscope numérique à haute définition permettant l'affichage haute définition lors de modes de reproduction spéciale

(30) Priority: 27.05.1993 US 68254
(43) Date of publication of application: 04.01.1995
(73) Proprietor: MATSUSHITA ELECTRIC INDUSTRIAL CO., LTD., Kadoma-shi, Osaka-fu, 571 (JP)
(72) Inventor: Naimpally, Saiprasad V., Langhorne, PA 19047 (US); Kim, Hee-Yong, Plainsboro, NJ 08536 (US)
(74) Representative: Marx, Lothar, Dr.

(56) References cited:
- EP-A- 0 367 264
- EP-A- 0 505 985
- EP-A- 0 536 630
- EP-A- 0 562 845
- EP-A- 0 606 857

## Description

### BACKGROUND OF THE INVENTION

The present invention relates to a video tape recorder for recording high definition television (HDTV) signals and in particular to a recorder which records motion compensated compressed high definition television signals and yet allows a high definition display to be produced in trick-play modes, as well as to a corresponding method.

Digital high definition television production schemes have been under development for several years. These schemes typically produce higher quality television images and sound than conventional television systems. To do this, these systems convey more information than is conveyed in a conventional television signal.

Recent regulations issued by the Federal Communications Commission (FCC), however, require that this larger amount of information be sent within the same band of frequencies as a conventional television signal. To fit the relatively large band width High Definition Television (HDTV) signal into a standard television channel, the information content of the HDTV signal must be compressed.

Because of the relatively large degree of spatial redundancy and temporal redundancy in the HDTV signals, relatively high levels of data compression can be achieved in most television signals.

One method by which spatial redundancy is removed from a television signal is to generate a discrete cosine transform representation of the image. This representation resolves an image frame into coefficient values representing its various spatial frequency components. Portions of an image which are the same from pixel to pixel or which exhibit a repetitive pattern are resolved from many pixel values to a relatively small number of frequency coefficient values. In addition, since the human eye is less sensitive to quantization errors in image components having high spatial frequencies than in image components having relatively low spatial frequencies, the high spatial frequency coefficients may be coarsely quantized to further reduce the amount of data used to represent the image.

Temporal redundancy in an image is removed by encoding only the areas of a given frame which are different from corresponding areas of a previously encoded frame. This is generally known as predictive coding. Temporal redundancy can be further exploited to achieve even higher levels of data compression by performing motion compensation. Using this scheme, before a image block is encoded, the blocks surrounding it in a previously encoded frame are searched for one block which most closely matches the block in the current frame. The current block is then subtracted from the matching block in the previous frame. The spatial frequency coefficient values are generated based upon the differences between the two image blocks. Exemplary video image compression systems which employ motion-compensated predictive encoding techniques are 1) that proposed by the Motion Picture Experts Group (MPEG) and described in the document entitled "Coded Representation of Picture and Audio Information" ISO-IEC/JTC1/SC2/WG11 N0010 MPEG 90/41 dated July 25, 1990; and 2) the DigiCipher™ System, described in section 25.5 of the Television Engineers Handbook by K.B. Benson et al., McGraw Hill, 1992, pp. 2532-2543.

Other encoding techniques are also used in the MPEG and DigiCipher systems such as run-length coding, in which strings of identical values are encoded as a smaller number of values; and variable length coding, in which frequently occurring data values are assigned a digital code value having fewer bits than the code value assigned to less frequently occurring data values.

Regardless of the encoding technique, the encoded HDTV signal must be decoded before it can be displayed. For predictively encoded or motion compensated predictively encoded HDTV signals, the decoding apparatus may include one or more frame memories which hold images that have already been decoded. The pixel values held by these memories are used to reconstruct the predictively encoded data in the current frame.

Using either MPEG or DigiCipher encoding techniques, HDTV signals having a data rate of between 600 and 1200 Megabits per second (Mbps) can be compressed to produce a signal having a data rate of less than 20 Mbps. As with other terrestrial broadcast signals, consumers will want to be able to receive, display and record signals representing high resolution video images with little no loss of resolution.

On first analysis, the compression of HDTV signals should be beneficial for recording the signals on home use Video Tape Recorders (VTR's), since these units typically have only a limited bandwidth available for recording video signals. For example, a paper by C. Yamamitsu et al. entitled "A Study on Trick-plays For Digital VCR", IEEE Transactions on Consumer Electronics, Volume 37, No. 3, August, 1991, PP. 261-266, discloses a home use VCR having a recording rate of 27 Megabits per second (Mbps). A typical HDTV signal, prior to encoding, has a bit-rate of 600 Mbps. Compression methods such as MPEG or DigiCipher can reduce these HDTV signals to have a bit-rate of approximately 18 Mbps without noticeably degrading the image quality when the compressed signal is expanded.

The problem with predictively encoded HDTV signals does not occur in recording or in normal playback modes but in trick-play modes such as fast-forward and reverse in which the video image is displayed at a higher rate than that at which it was recorded.

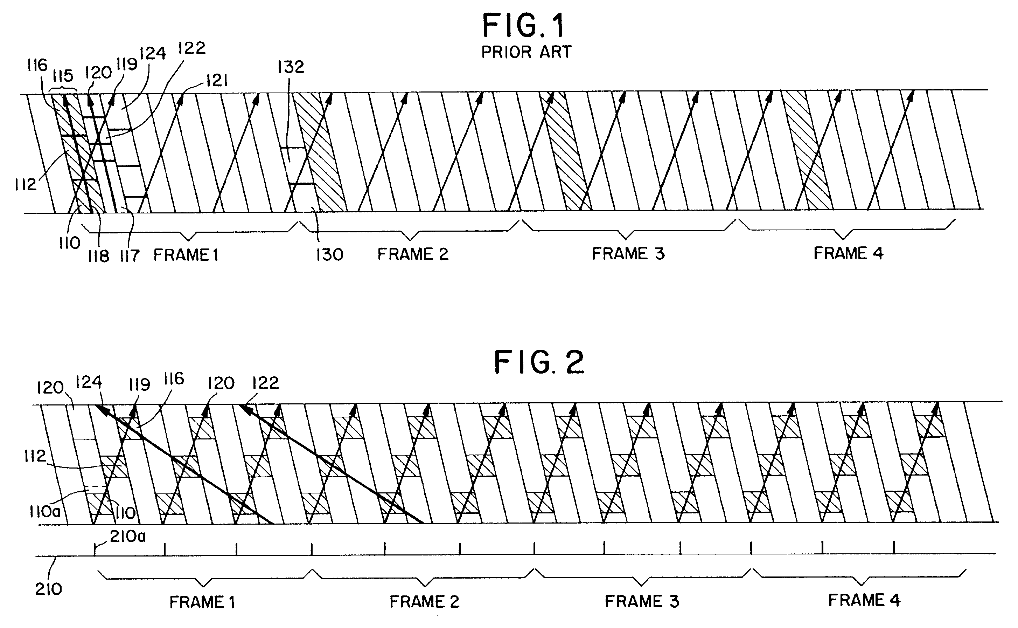

The problem is illustrated in Figures 1 and 2. Figure 1 shows the track scanning sequence of pre-recorded video information during normal playback. As shown in Figure 1, slices of the video image 110, 112 and 116 are scanned in sequence as the tape head moves along the track 115. Each of these slices represents the same number of pixels in the reproduced image. As shown in the figure, however, the amount of data in a slice may vary from slice-to-slice. This variation in the amount of data in a slice occurs because of the relative coding efficiencies of the slices in the original HDTV signal. Slices which represent still portions of a multi-frame image or which represent portions having relatively little variation may be encoded using a relatively small number of data values. Image portions containing a high level of detail and having no corresponding portions in previously encoded frames may require a significantly larger number of data values when they are encoded.

When the image signals are read from the tape during normal playback each slice of each frame is read from the tape in sequence as indicated by the arrows 118 and 120. If the coding method which produced the HDTV signals used predictive coding techniques the recorded data includes both intra-frame coded data such as that shown by the shaded tracks of Fig. 1 and predictively coded data such as that shown as unshaded tracks of Fig. 1. In normal playback as the data is removed from the tape the pixel values produced from the intra-frame encoded data are stored in a memory and are available for use in reconstructing the predicted frames.

Figure 1 illustrates the track scanning sequence during a fast-forward trick-play mode. In this mode, instead of sequentially taking the slices 110, 112 and 116 the slices recovered are in sequence 110, 112, 122 and 124. As shown in this figure, some slices, for example, slices 116 and 120 are never recovered from the tape. If some of these slices (e.g. 116) contain intra-coded data then their corresponding pixel values will not be available when corresponding slices (e.g. 130 and 132) of a predicted frame, which is based on the intra-coded frame, are read from the tape. Consequently it may not be possible to properly reconstruct the predicted frame for display.

Because of the difficulties of recovering predicted frames in trick-play modes most of the proposed methods for recording digitally compressed (bit-rate reduced) signals have restricted the encoding techniques that are used to encode data for recording on VTR's to exclude predicted frames. Exemplary systems of this type are described in an article by C. Yamamitsu, et al. entitled "An Experimental Study for a Home-Use Digital VTR", IEEE Transactions on Consumer Electronics, Volume 35, No. 3, August 1989, PP. 450-457, and in a paper by J. Lee et al., entitled "A Study on New DCT-Based Bit Rate Reduction Algorithm and Variable Speed Playback For A Home-Use Digital VCR", IEEE Transactions on Consumer Electronics, Volume 38, No. 3, August 1992, PP. 236-242. As described above, since these systems do not use predicted frames, they cannot compress data with the efficiency of a system which does use predicted frames. Consequently, for the same compressed data rate, they cannot achieve the same levels of detail in the reproduced image as a system, such as MPEG, which uses motion-compensated predictive coding techniques.

EP 0 562 845 A2, published after the priority date of the present patent, discloses a variable length code recording/playback apparatus, which by encoding intra-frame data and inter-frame data in variable length code, records them as recorded codes on tracks of a prescribed recording medium and plays them back, comprising a data rearranger for recording the data in areas to be played back in at least two specific speed mode playbacks on the tracks by rearranging prescribed data out of the data encoded in variable length code, a variable length decoder for playing back the data recorded on the recording medium and decoding them in variable length code, a data rearrangement canceller for controlling and restoring the time series of the output of the variable length decoder to the original data train before the rearrangement, and a decoder for constructing a playback picture from the decoded outputs for several frames in the specific speed mode playback by decoding the output of this data rearrangement canceller.

EP 0 536 630 A2 discloses a band compression signal processor designed to convert video signals into digital signals and to perform band compression by effecting both intra-frame encoding and inter-frame encoding. The signal output by the processor is supplied to a recording/reproducing apparatus. In the apparatus, the signal is recorded on a magnetic tape and reproduced therefrom by a helical scanning method. The intra-frame-signal encoded is arranged within such a region as to be read out in fast reproduction mode.

### SUMMARY OF THE INVENTION

The present invention relates to a digital video tape recorder (DVTR) for recording video data as recited in claim 1 and to a corresponding recording method as recited in claim 6. Such a video tape recorder records motion compensated encoded high definition television signals. Compressed video signals to be recorded are processed to separate intra-frame encoded data from motion compensated encoded data. The intra-frame coded data is then interleaved with the motion compensated data and recorded at positions on the tape such that a substantial portion of the intra-frame coded data will be recovered in certain pre-defined trick-play modes.

### BRIEF DESCRIPTION OF THE DRAWINGS

Figure 1 (prior art) is a graphical representation of a segment of video tape containing data encoded according to the DigiCipher standard, which illustrates the scanned path of the video heads in normal and three-times (3x) fast-forward modes.
Figure 2 is a graphical representation of a segment of video tape which contains the same signal as shown in Figure 1 but recorded using an other apparatus.
Figure 3 is a graphical representation of a segment of video tape which is useful for describing how recorded segments of video information may be recovered.
Figure 4 (prior art) is a graphical representation of a segment of video tape which illustrates how data representing a group of frames (GOF) recorded according to the MPEG standard may be recorded on a DVTR.
Figure 5 is a graphical representation of a segment of video tape which illustrates how the signal shown in Figure 4 may be recorded using apparatus in accordance with the subject invention.
Figure 6 is a block diagram of a DVTR which includes an embodiment of the present invention.

### DETAILED DESCRIPTION

The present invention concerns a method for recording compressed video in a manner which allows for high resolution display in trick-play modes. Although it is not limited to this system, the invention is described in terms of the MPEG encoding method. In order to fully understand the invention, it is helpful to first understand how the data is encoded according to the DigiCipher and MPEG standards.

The DigiCipher system encodes video using both intra-frame coding and motion-compensated predictive coding. In each frame, a portion of the image is intra-frame coded and the remainder is coded using motion adaptive techniques. Both the intra-frame and predictively encoded portions utilize discrete cosine transforms and variable length codes to produce the compressed image data. The intra-frame coded portion of the image changes from frame to frame so that the entire image is periodically refreshed. This limits undesirable propagation of the errors through the predictively encoded portions of the frame.

Figure 1 is a diagram of an exemplary tape format for recording four frames of the DigiCipher signal. For convenience, the Figure shows each frame as occupying nine tracks, one image slice per track, and only one slice in each frame (indicated by the shaded track) contains intra-frame coded data. In this exemplary tape format each track of the tape corresponds to a horizontal slice of the image. As shown in Figure 1 the intra-frame encoded slice advances by one image slice from frame-to-frame.

In an actual recorded signal, the compression efficiency changes depending on the spatial frequency content of the image. Accordingly, an individual frame may use more than nine tracks or less than nine tracks. In addition where nine tracks are needed, the intra-frame coded portion of the image frame may occupy more than one track or less than one track.

The problem with recovering and displaying recorded video information which is encoded using the DigiCipher standard occurs in trick-play modes. In these modes, for example fast-forward and reverse, the tape-head does not follow the tracks as indicated by the arrows 118 and 120 of Figure 1 but instead follows a path which crosses several tracks as illustrated by the arrows 119 and 121. As described above, only intra-coded data may be recovered for display in trick-play mode. As shown in Figure 1, only a very small amount of video data would be recovered in a three times (3x) forward mode, illustrated by the arrows 119 and 121.

Figure 2 is a block diagram of an alternative tape formatting method suitable for use with the DigiCipher encoding technique which would allow high resolution images to be displayed during specific trick-play modes. As shown in Figure 2, each of the intra-frame coded blocks is divided into multiple smaller blocks which are then recorded at specific positions on the tape so that they will be recovered in sequence as the head crosses the tape in specific trick-play modes. In the exemplary tape format a trick-play mode of three times (3x) forward speed is illustrated by the arrows 119 and 120 and a mode of six times (6x) reverse speed is indicated by the arrows 122 and 124.

As shown in Figure 2 essentially all of the intra-coded data is recovered in the 3x forward speed mode and half of the intra-coded data is recovered in the 6x reverse mode. Recall, however, that the intra-coded data in any given frame represents only a portion of that frame, in this example a slice or segment corresponding to one-ninth of the image. Thus, in one frame period at 3x forward speed, three-ninths or one-third of an image (i.e. three slices from three respectively different frames) would be recovered. The remaining two-thirds of the image would be displayed from earlier frames. Thus, the trick-play display in 3x forward speed would consist of nine slices or segments from nine respectively different frames. This display, however, would be at the full resolution of the high definition image.

As described above, each of the intra-frame encoded segments 110, 112 and 116 may be of different length. These segments are encoded such that they reproduce a specific sized block of pixels in the final image. Where the image area represented by a block contains a relatively large amount of high spatial frequency image components, the intra-frame encoded data used to represent that block may be larger than for a block which represents an area having low level of detail. When a block is larger than may be scanned by the head in trick-play mode, as indicated by the area 110a appended to block 110, the block is recorded such that the start of the block will be recovered in trick-play mode. The pixels represented by the data which cannot be recovered may be obtained from the earlier frame or, alternatively, may be filled in with a neutral color for example, gray.

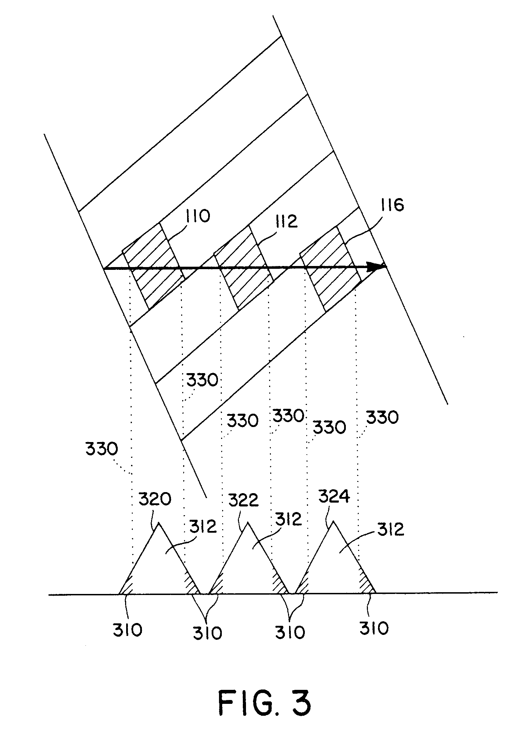

Figure 3 shows the path of the head in trick-play mode in order to illustrate how the data blocks may be recovered. In Figure 3 the tape is rotated so that the head track is roughly horizontal. The triangles 320, 322 and 324 illustrate times when image data can and cannot be recovered from the tape due to the head crossing a track. The shaded areas 310 of the triangles represent times when image data cannot be recovered because data is available from two tracks simultaneously and at low levels. The areas 312, on the other hand, represent times when data at a relatively high level is available from a single track. As shown by the dotted lines 330, the positions of the segments 110, 112 and 116 are aligned with the times 320, 322 and 324 at which the tape head may recover data in the 3x forward trick-play mode.

While it is desirable to simply rearrange the intra-frame encoded and motion compensated encoded segments as they are received, it may be difficult to both maintain the integrity of the segments and to record the intra-coded data at the preferred locations on the tape. Accordingly, it is contemplated that individual segments which were encoded using motion compensation encoding techniques may be split, and an intra-frame encoded segment inserted between the parts of the split segment when the data is recorded on the tape. Of course, this splitting of segments would necessarily be reversed when the data is processed for display after it is recovered from the tape.

Alternatively, due to the relatively large bandwidth that is available for digital signals (e.g. 25 MHz) and the relatively small bandwidth of the encoded digital signal (e.g. 18 MHz), it may be preferable to encode the image data at this higher bandwidth, in order to make room for an intra-coded segment at the proper location on the tape. Due to the extra bandwidth, it may be possible to "move" encoded image segments on the tape to make room for the intra-frame encoded segments at their desired positions.

Returning to Figure 2, the tape head is maintained in proper alignment during trick-play modes to recover the data by using a timing track 210. The exemplary timing track 210 provides a series of marks 210a which indicate the starting head-scan positions for the tape heads to recover the maximum amount of data in the chosen trick-play mode. It is noted that only specific trick-play speeds are accommodated by the particular tape format. This should not be a problem, however, since most conventional home-use video tape recorders only allow for one trick-play viewing mode in forward speed and one in reverse speed.

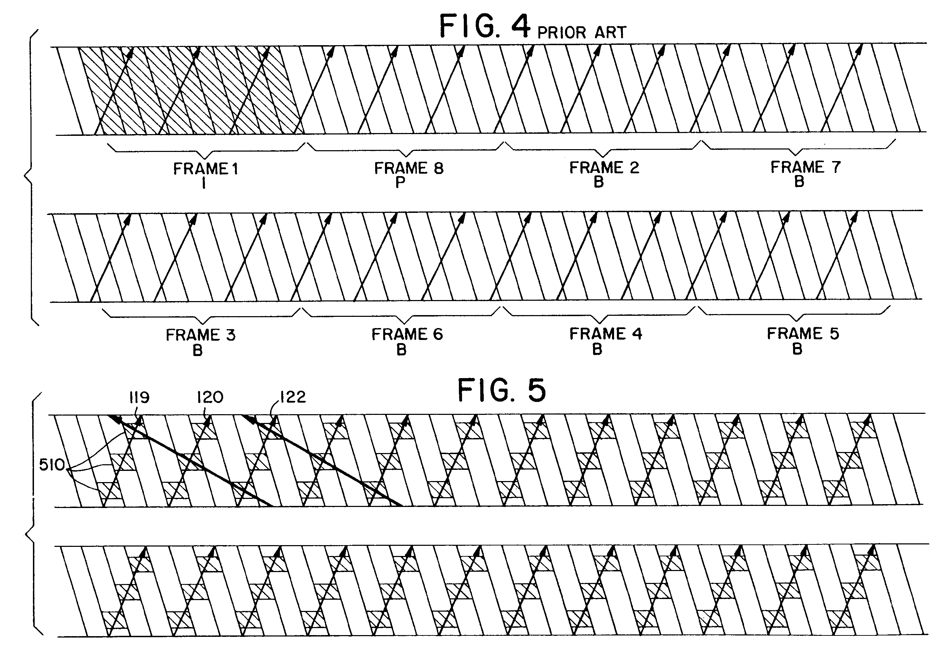

Figure 4 is a tape format diagram which illustrates how image data from a group of eight frames encoded according to the MPEG standard may be recorded on tape. The particular group of frames (GOF) consists of a single intra-coded frame (I-frame), frame 1; six bidirectionally encoded frames (B-frames), frames 2-7; and one predictively encoded frame (P-frame), frame 8. Of these frames, only the data in frame 1 may be reliably recovered by the VTR in trick-play mode. Frames 2-8 contain motion compensated predictively encoded data which cannot be reliably recovered in the trick-play modes due to the absence of data on which the prediction was based, as described above.

It is noted that the frames as received and recorded are not in order. Frame 8 follows frame 1 which is followed in sequence by frames 2, 7, 3, 6, 4 and 5. This is a typical transmission sequence for an MPEG group of frames (GOF). In a typical MPEG receiver, the frames shown in figure 4 would be decoded as follows. First, frame 1 would be received, decoded and stored into a memory. While frame 1 was being decoded, frame 8 would be received and stored temporarily. After frame 1 has been decoded, frame 8 would be processed as predicted data based on the stored frame 1. Next, each of the frames 2, 7, 3, 6, 4 and 5 would be bidirectionally decoded using data in the stored frames 1 and 8.

It is noted that according to this scheme frame 1 remains in the memory of the receiver until all of the frames 1-8 have been decoded. In this exemplary embodiment as the frames are decoded they are made available for display. The frames are displayed, however, in sequence with frame 1 being displayed first and frame 8 being displayed last.

Figure 5 is a tape format diagram which illustrates how the MPEG encoded data may be rearranged to allow for high resolution display in trick-play modes. According to this scheme the data from the one intra-coded frame is divided into blocks 510 which are distributed along the tape at positions which will be scanned by the tape head in the defined trick-play modes. As shown in Figure 5, substantially all of the intra-coded image will be recovered in the 3x forward trick-play mode and approximately one-half of the image will be recovered in the 6x reverse play mode.

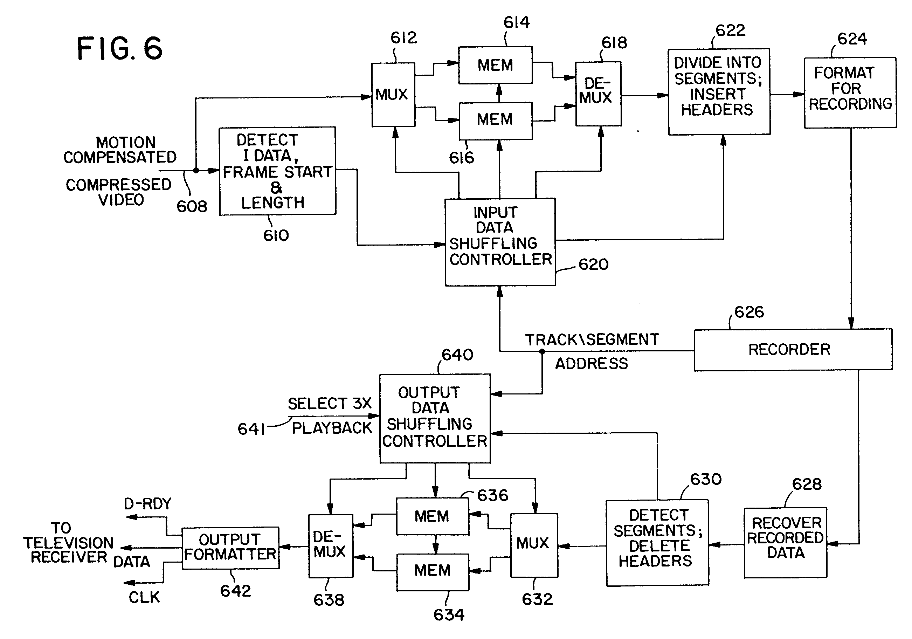

Figure 6 is a block diagram of exemplary circuitry which may be used to implement the tape encoding schemes shown in figures 2 and 5. Compressed video signals which include both intra-frame coded data (IDATA) and motion compensated predictively encoded data (MCDATA) are applied, via a terminal 608, to a multiplexer 612 and to circuitry 610 which detects the start and length of each frame and the position of any IDATA in the frame. In the DigiCipher encoding method, image slices which are represented by IDATA are identified in the data sequence. This may be, for example, by values in their respective slice header records.

Information recovered by the circuitry 610 is applied to an input data shuffling controller 620. The controller 620 generates the control signal for the multiplexer 612 causing it to direct the compressed video data to either one of two memories 614 or 616. In a first apparatus, one suitable for processing data which is encoded according to the DigiCipher standard, each of the memories 614 and 616 is large enough to hold a single compressed frame. As set forth above, however, compressed frames may be of different lengths. Assuming that the average length of a compressed frame is nine tracks, a memory having sufficient storage space to hold data on 27 tracks should be sufficient for either of the memories 614 or 616.

The memories 614 and 616 are coupled to the data inputs of a demultiplexer 618. The demultiplexer 618 is also controlled by the input data shuffling controller 620 to provide data that is read from one of the two memories 614 and 616. The data read from the memories 614 and 616 is determined by address values which are provided by the controller 620. Controller 620 is also responsive to track/segment addresses provided by the recorder 626. These addresses identify the position on the tape at which data will be recorded, and, so, allow the controller to read the IDATA segments from the appropriate memory 614 or 616 so that they will be recorded at the specific locations on the tape shown in Figure 2.

In the exemplary first apparatus, the controller 620 generates a table for each input frame which identifies the encoded segments or slices as they are stored in the memory. This table is maintained in a memory (not shown) which is internal to the controller 620. The controller 620 uses this table and the track/segment address from the recorder 626 to provide either an IDATA segment or an MCDATA slice from the stored frame at the appropriate time to generate a recorded image format such as that shown in Figure 2.

In this exemplary first apparatus, the memories 614 and 616 are operated as ping-pong random-access buffers. Data is received in sequence into one of the memories 614 and 616 via the multiplexer 612 while data is provided as specifically accessed blocks from the other one of the memories 616 or 614, via the demultiplexer 618. Since each of the memories 614 and 616 holds one compressed frame, the output signal provided by the demultiplexer 618 is a sequence of segments in which the intra-frame coded data is distributed among the motion compensated predictively encoded data as illustrated in Figure 2.

The data provided by the demultiplexer 618 is applied to circuitry 622 which divides the data into segments and inserts headers. These headers identify each data segment as being either IDATA or MCDATA and indicate the length of the data segment and the position of the decoded pixels in the resulting frame.

The circuitry 622 relies on information provided by the data input shuffling controller 620 to generate these headers. As the controller 620 reads successive segments from the memories 614 and 616 according to the tape format shown in Figure 2, it provides a signal to the circuitry 622 which indicates the type and length of the data segment being provided. The circuitry 622 generates appropriate header information for the segments and applies the resulting data stream to circuitry 624 which formats the data for recording. The circuitry 624 may include for example an error correction code (ECC) encoder (not shown), a channel encoder (not shown) and a recording amplifier (not shown). Signals provided by the circuitry 624 are recorded onto the tape by the recorder 626 to realize the tape format shown in Figure 2.

During normal playback and playback during trick-play modes, data is read from the tape by the recorder 626 and applied to circuitry 628 which recovers the recorded data from the signals read from the tape. The circuitry 628 may include for example a head amplifier (not shown) a detector (not shown) and an ECC decoder (not shown). The output signal of the circuitry 628 is a digital data stream which is applied to circuitry 630 which detects the segments and deletes the header information that was inserted by the circuitry 622. The circuitry 630 also generates a signal indicating when a new segment is being processed. This signal is applied to output data shuffling control circuitry 640.

The output data stream provided by the circuity 630, the encoded data without the header information, is applied to a multiplexer 632. The multiplexer 632 is controlled by a signal provided by the output data shuffling controller 640 to apply the input signals to either one of the memories 634 and 636. The controller 640 is also coupled to the memories 634 and 636 to control the addresses into which the data is stored and from which the data is read. Data read from the memories 634 and 636 is applied to a demultiplexer 638 which is also controlled by the data output shuffling controller 640.

The output data stream provided by the demultiplexer 638 during normal play mode is that shown in Figure 1. The intra-frame encoded data is restored to its proper position in the data stream as defined by the DigiCipher encoding method. This signal is applied to an output formatter 642 which generates three signals, a data ready signal (D-RDY), a data signal (DATA) and a clock signal (CLK). These signals are applied to a television receiver as if they were received broadcast video signals. The data is reformatted from the recorded format shown in Figure 2, to the standard DigiCipher format shown in Figure 1, by the output shuffling controller 640. In the exemplary first apparatus, the controller 640 stores data into one of the memories 634 and 636 in sequence and reads data from the other memory segment by segment in order to restore the data to the format shown in Figure 1.

The memories 634 and 636 may be identical to the memories 614 and 616 described above. Each of these memories is large enough to hold one compressed frame video signal. The memories are controlled by the controller circuitry 640 to operate as ping-pong random-access buffers; one of the memories 634 and 636 is receiving data while the other memory 636 and 634, is used to provide data to the output formatter 642 via the demultiplexer 638.

The output data shuffling controller 640 is also responsive to a signal 641 which indicates that 3x forward or 6x reverse playback has been requested. Responsive to this signal the controller 640 will monitor the track/segment address provided by the recorder 626 and the data provided by the circuitry 628 to determine when intra-frame encoded data is being provided by the tape. In this trick-play mode, only this intra frame encoded data is recorded in the memory 636 or 634. Since this data may be provided sporadically to the television receiver, the output formatter 642 will generate its D-RDY signal to be high only when a valid intra-frame coded data is being provided to the television receiver.

The same circuitry with minor modifications may be used to process data which is encoded according to the MPEG standard, as shown in figures 4 and 5. The main differences in the circuitry for processing MPEG data as opposed to circuitry for processing DigiCipher data is in the size of the memories 614, 616, 634 and 636 and in the operation of the input and output data shuffling controllers 620 and 640. In this exemplary embodiment of the invention, each of the memories 614, 616, 634 and 636 has a sufficient number of storage cells to hold an entire group of frames of the MPEG encoded data. In the example shown in figures 4 and 5, an average group of frames would be stored in 72 tape tracks. The number of tracks needed to represent a given group of frames may vary depending upon the efficiency with which the underlying image may be compressed. It is contemplated however, that a memory having a sufficient number of storage cells to hold 150 tape tracks would be sufficient for any of the memories 614, 616, 634 or 636.

The input data shuffling controller 620 used in this embodiment of the invention would rearrange the data from the format shown in Figure 4 to that shown in Figure 5. The one encoded I-frame at the beginning of the group of frames is divided into blocks which are then distributed among the encoded blocks in the remainder of the group of frames. During normal replay, the output data shuffling controller 640 would rearrange the data, as stored in the format shown in Figure 5, to produce an output signal which is consistent with the format shown in Figure 4. Both of these reformatting operations are performed by storing the data into one of the ping-pong memories in sequence, as it is received, while monitoring and building a table which matches the individual segments to their locations in the memory. When data is read out, it is rearranged so that the intra-frame encoded information is in a different position. This position is determined from the table which was developed when the data was stored in the memory.

While the invention has been described with reference to the MPEG encoding standard, it is contemplated that it may be used with other systems.

While the invention has been described in terms of an exemplary embodiment it is contemplated that it may be practiced as outlined above within the scope of the appended claims.

## Claims

1. A digital video tape recorder having at least one tape head for recording video data onto a tape, the video tape recorder having a normal play mode and a trick play mode, wherein the tape head follows a first track across the tape at a first fixed speed in the normal play mode and a second, different track across the tape at a second fixed speed in the trick play mode, the digital video tape recorder comprising:
a) receiving means (608) for receiving a signal including intra-frame encoded slices and motion compensated encoded slices of successive frames of a video image;
b) identifying means (610) for separately identifying the respective intra-frame encoded slices and the motion compensated encoded slices of each of the successive frames of the video image;
c) recording means (626) for recording the intra-frame encoded slices and the motion compensated encoded slices on the tape; and
d) shuffling means (620, 612, 614, 616, 618, 622), coupled between the identifying means (610) and the recording means (626);
CHARACTERIZED IN THAT:
e) the receiving means (608) receives a sequence of the video data representing encoded slices of individual frames of a group of successive frames such that the group of frames includes one frame in which each slice is encoded using intra-frame encoding techniques and other frames of the group of frames are encoded using motion compensated encoding techniques;
f) the identifying means (610) identifies only the slices of the intra-frame encoded frame as being intra-frame encoded slices; and
g) the shuffling means (620, 612, 614, 616, 618, 622) segments the identified intra-frame encoded slices from the one frame and the motion compensated slices of the other frames in the group of successive frames into blocks and interleaves the blocks of the identified intra-frame encoded slices among the blocks of all of the other frames in the group of successive frames, such that, when the interleaved blocks are recorded by the recording means (626), the at least one tape head follows a first track across the tape in the normal play mode and a second, different track across the tape in the trick play mode, the respective intersections between the first track and the second track defining areas (510) of the tape from which data may be recovered in both the normal play mode and the trick play mode and the blocks of the identified intra-frame encoded slices are recorded at the intersections.

2. A digital video tape recorder according to claim 1, wherein the digital video tape recorder has two heads, the trick-play mode is a three-times forward play mode and the shuffling means (620, 612, 614, 616, 618, 622) interleaves the intra-frame encoded blocks of the one frame among the motion compensated encoded blocks such that the tape heads pass over substantially all of the intra-frame encoded blocks in both the trick-play mode and in the normal play mode.

3. A digital video tape recorder according to claim 2, wherein the recording means (626) records a timing track which is used in trick-play mode to align the tape-heads with a preferred path across the tape, which preferred path contains the recorded intra-frame encoded image blocks of the one frame.

4. A video tape recorder according to claim 3, further including:
data recovery means (628) for recovering the recorded data from the tape;
output shuffling means (640, 630, 632, 634, 636, 638) for identifying the interleaved intra-frame encoded blocks of the one frame from among the recovered data and for rearranging the identified blocks and the motion compensated encoded blocks to produce an output signal during normal play mode which has the identified intra-frame encoded blocks of the one frame and the motion compensated encoded blocks of all of the other frames in the group of frames in an order equivalent to that of the encoded data received by the receiving means (608).

5. A digital video tape recorder according to claim 4, wherein the output shuffling means (640, 630, 632, 634, 636, 638) includes means for providing the identified intra-frame encoded blocks relatively exclusive of any other blocks as the output signal during trick-play mode.

6. A method for recording image data on a digital video tape recorder having at least one tape head, the video tape recorder having a normal play mode and a trick play mode, wherein the tape head follows a first track across the tape in the normal play mode and a second, different track across the tape in the trick play mode, the respective intersections between the first track and the second track defining areas (510) of the tape from which data may be recovered in both the normal play mode and the trick play mode, the method comprising the steps of:
a) receiving a sequence of data representing encoded slices of successive frames of a video image, wherein some slices of the successive frames have been encoded using intra-frame encoding techniques and other slices of the successive frames have been encoded using motion compensated encoding techniques;
b) separately identifying the respective intra-frame encoded slices and the motion compensated encoded slices in the received sequence of data values;
c) changing the order of the identified intra-frame encoded slices and motion compensated encoded slices in the sequence of image data to interleave the intra-frame encoded slices of one frame among the motion compensated encoded slices of other frames to produce a reordered data sequence; and
d) recording the intra-frame encoded slices and the motion compensated encoded slices on the tape;
CHARACTERIZED IN THAT:
e) the receiving step includes the step of receiving a sequence of the image data that has been previously encoded, the sequence representing encoded slices of successive frames of a video image, wherein a group of frames including one frame of the successive frames of the video image has been encoded using only intra-frame encoding techniques and other frames of the successive frames of the video image have been encoded using motion compensated encoding techniques;
f) the identifying step identifies only the slices of the at least one frame which has been encoded using only intra-frame encoding techniques as the intra-frame encoded slices;
g) before changing the order of the identified intra-frame encoded slices in step d), the identified intra-frame encoded slices and the motion compensated slices of the other frames of the successive frames of the video image are segmented into blocks having a substantially fixed size, which fixed size blocks have a size consistent with the areas of the tape on which data may be recovered in both the normal play mode and the trick play mode, and step d) reorders the blocks of the intra-frame encoded slices of the one image frame to be interleaved among the blocks of the motion compensated slices of the other frames of the successive frames of the video image; and
h) the recording step records the reordered data sequence on the tape such that, during playback, the at least one tape head passes over all of the intra-frame encoded blocks in both the normal play mode and in the trick play mode.

## Patentansprüche

1. Digitaler Videoband-Recorder mit mindestens einem Bandkopf zum Aufzeichnen von Videodaten auf einem Band, wobei der Videoband-Recorder einen normalen Wiedergabemodus und einen speziellen (trick play) Modus aufweist, wobei der Bandkopf einer ersten Spur über das Band bei einer ersten festen Geschwindigkeit in dem normalen Spiel-Modus folgt und einer zweiten, verschiedenen Spur über das Band bei einer zweiten festen Geschwindigkeit bei dem speziellen (trick play) Modus, wobei der digitale Videoband-Recorder aufweist:
a) eine Empfangsvorrichtung (608) zum Empfangen eines Signals, welches selbstkodierte (intra-frame encoded) Teilstücke und bewegungskompensierte kodierte Teilstücke von aufeinanderfolgenden Vollbildern bzw. Frames eines Videobildes aufweist;
b) eine Identifizierungs- bzw. Bestimmungs-Vorrichtung (610) zum separaten bzw. getrennten Identifizieren bzw. Bestimmen der jeweiligen selbstkodierten Teilstücke und der bewegungskompensierten kodierten Teilstücke eines jeden der aufeinanderfolgenden Vollbilder bzw. Frames des Videobildes;
c) eine Aufzeichnungsvorrichtung (626) zum Aufzeichnen der selbstkodierten Teilstücke und der bewegungskompensierten kodierten Teilstücke auf dem Band; und
d) eine Umstell-(shuffling)Vorrichtung (620, 612, 614, 616, 618, 622), welche zwischen der Identifizierungsvorrichtung (610) und der Aufzeichnungsvorrichtung (626) verschaltet bzw. gekoppelt ist;
dadurch gekennzeichnet, dass
e) die Empfangsvorrichtung (608) eine Sequenz bzw. Abfolge der Videodaten empfängt, welche kodierte Teilstücke von einzelnen Vollbildern bzw. Frames einer Gruppe von aufeinanderfolgenden Vollbildern darstellt, so dass die Gruppe der Vollbilder ein Vollbild enthält, bei welchem jedes Teilstück unter Verwendung von selbstkodierenden Techniken kodiert ist, und andere Vollbilder der Gruppe der Vollbilder sind unter Verwendung von bewegungskompensierten Kodiertechniken kodiert;
f) die Identifizierungsvorrichtung (610) identifiziert bzw. bestimmt nur die Teilstücke der selbstkodierten Vollbilder als selbstkodierte Teilstücke; und
g) die Umstell-(shuffling)Vorrichtung (620, 612, 614, 616, 618, 622) unterteilt bzw. segmentiert die identifizierten bzw. bestimmten selbstkodierten Teilstücke von dem einen Vollbild bzw. Frame und die bewegungskompensierten Teilstücke der anderen Vollbilder in der Gruppe von aufeinanderfolgenden Vollbilder in Blöcke und verschachtelt bzw. mischt (interleave) die Blöcke der bestimmten selbstkodierten Teilstücke unter bzw. mit den Blöcken aller anderen Vollbilder in der Gruppe von aufeinanderfolgenden Vollbilder, so dass, wenn die verschachtelten Blöcke von der Aufzeichnungsvorrichtung (626) aufgezeichnet werden, der mindestens eine Bandkopf einer ersten Spur über das Band in der normalen Abspielbetriebsart bzw. Modus folgt und einer zweiten, verschiedenen Spur über das Band bei dem speziellen (trick play) Modus, wobei die jeweiligen Überschneidungen bzw. Überlappungen zwischen der ersten Spur und der zweiten Spur Bereiche bzw. Flächen (510) des Bandes definieren, von welchen Daten in beiden, dem normalen Abspiel-Modus und dem speziellen (trick play) Modus wiedergewonnen werden können, und die Blöcke der identifizierten bzw. bestimmten selbstkodierten (intra-frame encoded) Teilstücke werden bzw. sind bei den Überschneidungen bzw. Überlappungen aufgezeichnet.

2. Digitaler Videoband-Recorder nach Anspruch 1, wobei der digitale Videoband-Recorder zwei Köpfe aufweist, der spezielle (trick play) Modus ist ein 3-fach Vorwärtsabspielmodus und die Umstell-(shuffling)Vorrichtung (620, 612, 614, 616, 618, 622) verschachtelt die selbstkodierten Blöcke des einen Vollbildes unter bzw. mit den bewegungskompensierten kodierten Blöcken, so dass sich die Bandköpfe über im wesentlichen alle selbstkodierten Blöcke in beiden, dem speziellen (trick play) Modus und dem normalen Abspiel-Modus vorbeibewegen bzw. vorbeilaufen.

3. Digitaler Videoband-Recorder nach Anspruch 2, wobei die Aufzeichnungsvorrichtung (626) eine Zeitablauf- bzw. Zeitsteuer-(timing)Spur aufzeichnet, welche bei einem speziellen (trick play) Modus verwendet wird, um die Bandköpfe mit einem bevorzugten Weg bzw. Pfad über das Band auszurichten, wobei der bevorzugte Weg die aufgezeichneten selbstkodierten Bildblöcke des einen Vollbildes enthält.

4. Videoband-Recorder nach Anspruch 3, weiter aufweisend:
eine Datenrückgewinnungs- bzw. Wiederherstellungsvorrichtung (628) zum Rückgewinnen bzw. Lesen der aufgezeichneten Daten von dem Band;
eine Ausgabe-Umstell-(shuffling)Vorrichtung (640, 630, 632, 634, 636, 638) zum Identifizieren bzw. Bestimmen der verschachtelten selbstkodierten Blöcke des einen Vollbildes unter den wiedergewonnenen Daten und zum Umordnen bzw. neu Anordnen der identifizierten Blöcke und der bewegungskompensierten kodierten Blöcke, um ein Ausgabesignal während eines normalen Abspiel-Modus zu erzeugen, welches die identifizierten selbstkodierten Blöcke des einen Vollbildes aufweist und die bewegungskompensierten kodierten Blöcke aller anderen Vollbilder in der Gruppe der Vollbilder, in einer Reihenfolge, welche derjenigen der kodierten Daten äquivalent ist, welche von der Empfangsvorrichtung (608) empfangen wird.

5. Digitaler Videoband-Recorder nach Anspruch 4, wobei die Ausgabe-Umstell(shuffling)Vorrichtung (640, 630, 632, 634, 636, 638) eine Vorrichtung zum Liefern bzw. zur Verfügungstellen der identifizierten selbstkodierten Blöcke mit dem relativen Ausschluss von allen anderen Blöcken als das Ausgangssignal während des speziellen (trick play) Modus aufweist.

6. Verfahren zum Aufzeichnen von Bilddaten auf einem digitalen Videoband-Recorder mit mindestens einem Bandkopf, wobei der Videoband-Recorder einen normalen Abspiel-Modus und einen speziellen (trick play) Modus aufweist, wobei der Bandkopf einer ersten Spur über das Band in dem normalen Abspiel-Modus folgt und einer zweiten, verschiedenen Spur über das Band in dem speziellen (trick play) Modus, wobei die jeweiligen Überlappungen bzw. Überschneidungen zwischen der ersten Spur und der zweiten Spur Bereiche bzw. Felder (510) des Bandes definieren, von welchen Daten in beiden, dem normalen Abspiel-Modus und dem speziellen (trick play) Modus wiedergewonnen bzw. gelesen werden, wobei das Verfahren die Schritte aufweist:
a) Empfangen einer Sequenz von Daten, welche kodierte Teilstücke von aufeinanderfolgenden Vollbildern eines Videobildes darstellen, wobei einige Teilstücke der aufeinanderfolgenden Vollbilder unter Verwendung von selbstkodierenden Techniken kodiert wurden, und andere Teilstücke der aufeinanderfolgenden Vollbilder wurden unter Verwendung von bewegungskompensierten Kodier-Techniken kodiert;
b) separates bzw. getrenntes Identifizieren bzw. Bestimmen der jeweiligen selbstkodierten Teilstücke und der bewegungskompensierten Teilstücke in der empfangenen Sequenz der Datenwerte;
c) Verändern der Reihenfolge der identifizierten selbstkodierten Teilstücke und der bewegungskompensierten kodierten Teilstücke in der Sequenz bzw. Abfolge der Bilddaten, um die selbstkodierten Teilstücke eines Vollbildes zu verschachteln bzw. vermischen mit den bewegungskompensierten kodierten Teilstücken von anderen Vollbildern, um eine umgeordnete bzw. neu angeordnete Daten-Sequenz zu erzeugen; und
d) Aufzeichnen der selbstkodierten Teilstücke und der bewegungskompensierren kodierten Teilstücke auf dem Band;
dadurch gekennzeichnet, dass:
e) der Schritt des Empfangens einen Schritt zum Empfangen einer Sequenz von Bilddaten aufweist, welche vorangehend kodiert wurden, wobei die Sequenz kodierte Teilstücke von aufeinanderfolgenden Vollbildern eines Videobildes darstellt, wobei eine Gruppe von Vollbildern, welche ein Vollbild der aufeinanderfolgenden Vollbilder des Videobildes aufweist, nur unter Verwendung von selbstkodierenden (intra-frame encoding) Techniken kodiert wurde und andere Vollbilder der aufeinanderfolgenden Vollbilder des Videobildes wurden kodiert unter Verwendung von bewegungskompensierten Kodier-Techniken;
f) der Schritt des Identifizierens bzw. Bestimmens bestimmt nur die Teilstücke des mindestens einen Vollbildes, welches kodiert wurde unter Verwendung von nur selbstkodierenden Techniken, als selbstkodierte Teilstücke;
g) bevor die Reihenfolge der identifizierten bzw. bestimmten selbstkodierten Teilstücke in Schritt d) verändert wird, werden die identifizierten bzw. bestimmten selbstkodierten Teilstücke und die bewegungskompensierten Teilstücke der anderen Vollbilder der aufeinanderfolgenden Vollbilder des Videobildes in Blöcke unterteilt mit im wesentlichen fester Größe, wobei die Blöcke mit fester Größe eine Größe aufweisen, welche mit den Bereichen bzw. Flächen des Bandes übereinstimmen bzw. konsistent sind, auf welchen Daten in beiden, dem normalen Abspiel-Modus und dem speziellen (trick play) Modus wiedergewonnen bzw. gelesen werden können, und Schritt d) ordnet die Blöcke der selbstkodierten Teilstücke des einen Vollbildes so um, dass sie unter bzw. mit den Blöcken der bewegungskompensierten Teilstücke der anderen Vollbilder der nachfolgenden Vollbilder des Videobildes verschachtelt bzw. vermischt sind; und
h) der Schritt zum Aufzeichnen zeichnet die umgeordnete bzw. neu angeordnete Daten-Sequenz auf dem Band so auf, dass während eines Rücklaufes der mindestens eine Bandkopf sich über alle selbstkodierten Blöcke bewegt bzw. vorbeiläuft, in beiden, dem normalen Abspiel-Modus und dem speziellen (trick play) Modus.

## Revendications

1. Magnétoscope numérique ayant au moins une tête de lecture de bande pour enregistrer des données vidéo sur une bande, le magnétoscope ayant un mode de reproduction normale et un mode de reproduction spéciale, dans lequel la tête de lecture de bande suit une première piste d'un bord à l'autre de la bande à une première vitesse fixe dans le mode de reproduction normale et une deuxième piste, différente, d'un bord à l'autre de la bande à une deuxième vitesse fixe dans le mode de reproduction spéciale, le magnétoscope numérique comprenant:
a) un moyen de réception (608) pour recevoir un signal comprenant des tranches à codage intra-trame et des tranches à codage à compensation de mouvement, de trames successives d'une image vidéo;
b) un moyen d'identification (610) pour identifier séparément les tranches à codage intra-trame respectives et les tranches à codage à compensation de mouvement de chacune des trames successives de l'image vidéo;
c) un moyen d'enregistrement (626) pour enregistrer sur la bande les tranches à codage intra-trame et les tranches à codage à compensation de mouvement; et
d) un moyen de réorganisation (620, 612, 614, 616, 618, 622), couplé entre le moyen d'identification (610) et le moyen d'enregistrement (626);
CARACTERISE EN CE QUE:
e) le moyen de réception (608) reçoit une suite des données vidéo représentant des tranches codées de trames individuelles d'un groupe de trames successives d'une façon telle que le groupe de trames comprend une première trame dans laquelle chaque tranche est codée à l'aide de techniques de codage intra-trame, et d'autres trames du groupe de trames sont codées à l'aide de techniques de codage à compensation de mouvement;
f) le moyen d'identification (610) identifie seulement les tranches de la trame à codage intra-trame comme étant des tranches à codage intra-trame; et
g) le moyen de réorganisation (620, 612, 614, 616, 618, 622) segmente en blocs les trames à codage intra-trame identifiées de la première trame et les tranches à compensation de mouvement des autres trames du groupe de trames successives et entrelace les blocs des tranches à codage intra-trame identifiées parmi les blocs de toutes les autres trames de groupe de trames successives, de telle façon que, lorsque les blocs entrelacés sont enregistrés par le moyen d'enregistrement (626), la tête de bande au moins unique suive une première piste d'un bord à l'autre de la bande dans le mode de reproduction normale et une deuxième piste, différente, d'un bord à l'autre de la bande dans le mode de lecture spéciale, les intersections respectives entre la première piste et la deuxième piste définissant des zones (510) de la bande desquelles peuvent être extraites des données à la fois dans le mode de reproduction normale et le mode de reproduction spéciale et que les blocs des tranches à codage intra-trame identifiées soient enregistrés aux intersections.

2. Magnétoscope numérique selon la revendication 1, le magnétoscope ayant deux têtes, le mode de reproduction spéciale étant un mode de reproduction à triple marche avant et le moyen de réorganisation (620, 612, 614, 616, 618, 622) entrelace des blocs à codage intra-trame de la première trame parmi les blocs à codage à compensation de mouvement de façon que les têtes de lecture de bande passent sensiblement sur tous les blocs à codage intra-trame aussi bien dans le mode de reproduction spéciale que dans le mode de reproduction normale.

3. Magnétoscope numérique selon la revendication 2, dans lequel le moyen d'enregistrement (626) enregistre une piste de synchronisation qui, en mode de reproduction spéciale, sert à aligner les têtes de lecture de bande avec un trajet préféré d'un bord à l'autre de la bande, lequel trajet préféré contient les blocs enregistrés à codage intra-trame d'image de la première trame.

4. Magnétoscope selon la revendication 3, comprenant en outre:
un moyen d'extraction (628) de données pour extraire de la bande les données enregistrées;
un moyen de réorganisation (640, 630, 632, 634, 636, 638) de sortie pour identifier les blocs à codage intra-trame entrelacés de la première trame parmi les données extraites et pour réagencer les blocs identifiés et les blocs à codage à compensation de mouvement afin de produire pendant le mode de reproduction normale un signal de sortie qui comporte les blocs à codage intra-trame identifiés de la première trame et les blocs à codage à compensation de mouvement de toutes les autres trames du groupe de trames, dans un ordre équivalent de celui des données codées reçues par le moyen de réception (608).

5. Magnétoscope numérique selon la revendication 4, dans lequel le moyen de réorganisation (640, 630, 632, 634, 636, 638) de sortie comprend un moyen pour produire comme signal de sortie, pendant le mode de reproduction spéciale, les blocs à codage intra-trame identifiés, à l'exclusion de tout autre bloc.

6. Procédé pour enregistrer des données d'image sur un magnétoscope numérique ayant au moins une tête de lecture de bande, le magnétoscope ayant un mode de reproduction normale et un mode de reproduction spéciale, la tête de lecture de bande suivant une première piste d'un bord à l'autre de la bande dans le mode de reproduction normale et une deuxième piste, différente, d'un bord à l'autre de la bande dans le mode de reproduction spéciale, les intersections respectives entre la première piste et la deuxième piste définissant des zones (510) de la bande desquelles des données peuvent être extraites aussi bien dans le mode de reproduction normale que dans le mode de reproduction spéciale, le procédé comprenant les étapes consistant à:
a) recevoir une suite de données représentant des tranches codées de trames successives d'une image vidéo, certaines tranches des trames successives ayant été codées à l'aide de techniques de codage intra-trame et d'autres tranches des trames successives ayant été codées à l'aide de techniques de codage à compensation de mouvement;
b) identifier séparément les tranches à codage intra-trame respectives et les tranches à codage à compensation de mouvement dans la suite reçue de valeurs de données;
c) modifier l'ordre des tranches à codage intra-trame identifiées et des franches à codage à compensation de mouvement dans la suite de données d'image pour entrelacer les tranches à codage intra-trame d'une première trame parmi les tranches à codage à compensation de mouvement d'autres trames afin de produire une suite de données réordonnée; et
d) enregistrer sur la bande les tranches codées;
CARACTERISE EN CE QUE:
e) l'étape de réception comprend l'étape consistant à recevoir une suite des données d'image qui a été précédemment codée, la suite représentant des tranches codées de trames successives d'une image vidéo, un groupe de trames comprenant une première trame des trames successives de l'image vidéo ayant été codé uniquement à l'aide de techniques de codage intra-trame et d'autres trames des trames successives de l'image vidéo ayant été codées à l'aide de techniques de codage à compensation de mouvement;
f) l'étape d'identification n'identifie comme tranches à codage intra-trame que les tranches de la trame au moins unique qui a été codée uniquement à l'aide de techniques de codage intra-trame; g) avant de modifier l'ordre des tranches identifiées à codage intra-trame lors de l'étape d), les tranches à codage intra-trame identifiées et les tranches à compensation de mouvement des autres trames parmi les tranches successives de l'image vidéo sont segmentées en blocs ayant des dimensions sensiblement fixes, lesquels blocs à dimensions fixes ont des dimensions en accord avec les zones de la bande sur lesquelles des données peuvent être extraites aussi bien dans le mode de reproduction normale que dans le mode de reproduction spéciale, et l'étape d) réordonne les blocs des tranches à codage intra-trame de la première trame d'image à entrelacer parmi les blocs des tranches à compensation de mouvement des autres trames parmi les trames successives de l'image vidéo; et
h) l'étape d'enregistrement enregistre sur la bande la suite de données réordonnées de façon que, pendant la lecture, la bande au moins unique passe sur tous les blocs à codage intra-trame aussi bien dans le mode de reproduction normale que dans le mode de reproduction spéciale.
